(19) Europäisches Patentamt
European Patent Office
Office européen des brevets

(11) Publication number : **0 670 344 A1**

# (12) EUROPEAN PATENT APPLICATION


(21) Application number : **95301191.3**

(22) Date of filing : **23.02.95**

(51) Int. Cl.$^6$ : **C08J 9/26,** C08B 11/155, // C08L1:28

(30) Priority : **02.03.94 JP 54787/94**

(43) Date of publication of application : **06.09.95 Bulletin 95/36**

(84) Designated Contracting States : **DE FR GB**



(71) Applicant : **NISSHINBO INDUSTRIES, INC.
2-31-11, Ningyo-cho, Nihonbashi, Chuo-ku
Tokyo 103 (JP)**

(72) Inventor : **Sato, Takaya, c/o Tokyo Res. C.
Nisshinbo Ind., Inc.,
1-8-1 Nishiaraisakae-cho
Adachi-ku, Tokyo (JP)**
Inventor : **Uehara, Tsutomu, c/o Tokyo Res. C.
Nisshinbo Ind., Inc.,
1-8-1 Nishiaraisakae-cho
Adachi-ku, Tokyo (JP)**
Inventor : **Yoshida, Hiroshi, c/o Tokyo Res. C.
Nisshinbo Ind., Inc.,
1-8-1 Nishiaraisakae-cho
Adachi-ku, Tokyo (JP)**
Inventor : **Takenishi, Soichiro, c/o Tokyo Res. C.
Nisshinbo Ind., Inc.,
1-8-1 Nishiaraisakae-cho
Adachi-ku, Tokyo (JP)**

(74) Representative : **Stuart, Ian Alexander et al
MEWBURN ELLIS
York House
23 Kingsway
London WC2B 6HP (GB)**


## (54) Cellulose derivative sponge and method for producing it.


(57) Disclosed is a sponge comprising a cyanoethyl cellulose having a nitrogen content of 0.1 % by weight or more, that is obtained by extruding and regenerating under heat a mixture composed of viscose, reinforcing fibers, crystalline Glauber's salt and acrylonitrile at 90 to 100 °C, followed by washing it with water, or a cyanoethyl cellulose having a nitrogen content of 0.1 % by weight or more, that is obtained by casting into mold and regenerating under heat a mixture composed of viscose, reinforcing fibers, crystalline Glauber's salt and acrylonitrile followed by bringing into contact with an acidic aqueous solution and washing it with water, or a carbamoylethyl cellulose, or carboxyethyl cellulose to be obtained by hydrolyzing said cyanoethyl cellulose. The sponge is prepared by shaping a sponge stock composed of viscose, reinforcing fibers, crystalline Glauber's salt and acrylonitrile, followed by coagulating, regenerating and washing it with water. The sponge has good dry softness, good restorability and high cellulase resistance.


Fig.1

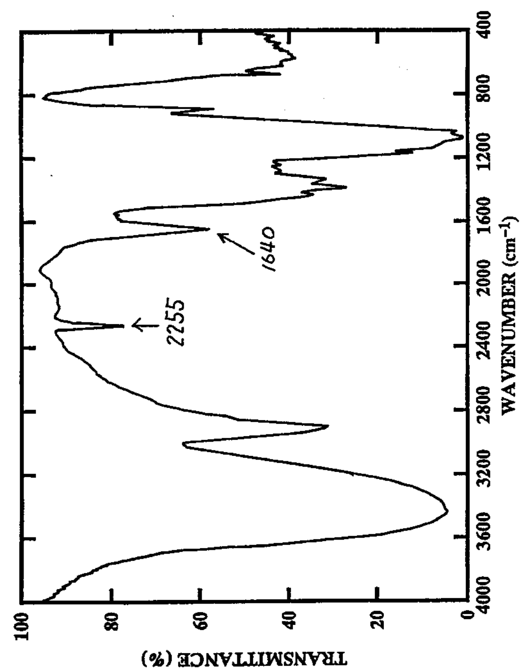


EP 0 670 344 A1

## FIELD OF THE INVENTION

The present invention relates to a cellulose derivative sponge to be produced by reacting a mixture, that has been prepared by mixing viscose with reinforcing fibers, crystalline Glauber's salt ($Na_2SO_4 \cdot 10H_2O$) and acrylonitrile, with or without an acidic aqueous solution, under heat and also to a method for producing it.

## BACKGROUND OF THE INVENTION

Cellulose sponge has a high water-absorbing property, as having, as the base material, a hydrophilic polymer cellulose, and it is used as cleaning things for washing cars and tableware because of its characteristics.

In general, cellulose sponge is produced by a mold heating method. Since the method gives cellulose sponge blocks in many cases, the blocks are cut into pieces having suitable sizes and are popularly used as cleaning things for washing tableware.

Recently, much attention has been directed to the high biocompatibility and the large surface area of cellulose sponge and there have been reported some examples of using cellulose sponge as carriers for cultivating microorganisms, fungi, plants, etc. (For example, Japanese Patent Laid - Open Nos. 52 - 65045, 52 - 136990, 60-87225, 03-290112, etc.)

Studies of utilizing the hydroxyl groups of cellulose to produce biological catalysts having chemically fixed enzyme thereon (fixed enzymes) have progressed greatly (for example, see a literature, Handbook of Biotechnology, 1991 (published by Tsusan Shiryo Chosa-kai), Japanese Patent Laid-Open No. 63-188386), and the development of the novel use of cellulose sponge is noticeable.

As carriers for culture and those for fixed enzymes, small sponge pellets are used in many cases. To produce such small sponge pellets, preferably employed is a method of continuous extrusion followed by continuous cutting as the production efficiency of the method is high (for example, Japanese Patent Laid - Open No. 6-263911).

To produce cellulose sponge, known is a method of mixing viscose with reinforcing fibers and crystalline Glauber's salt, then molding, heating and coagulating the resulting viscose mixture (a sponge stock), followed by treating the resulting solid with an acid to thereby regenerate the viscose into cellulose (for example, Japanese Patent Laid - Open No. 2 - 160844).

The present inventors have already proposed a method of more efficiently and continuously producing high - quality sponge (Japanese Patent Laid - Open No. 6-263911).

As one example of general methods for producing cellulose sponge, mentioned is a method of mixing viscose with reinforcing fibers and crystalline Glauber's salt, molding the resulting mixture having a predetermined shape, coagulating and regenerating it under heat, then bringing it into contact with an acidic aqueous solution to thereby completely regenerating the viscose into cellulose and thereafter washing and drying the thus-regenerated cellulose.

The temperature at which the viscose mixture is coagulated and regenerated is, in general, in the range 90°C - 100°C, and the time for treating the mixture is about 2 hours.

The amount of the reinforcing fibers to be added to viscose may be from 1 to 50 % by weight to the cellulose component in the viscose.

The mean particle size of the particles of the crystalline Glauber's salt to be added to viscose is, in general, from 1 = to 5 mm, and the amount of the salt to be added thereto is suitably determined depending on the density of the intended sponge. In general, the amount may be from 30 to 60 times by weight based on the weight of the cellulose component in the viscose.

If the amount of the salt added is large, the density of the sponge to be produced is lowered, and the mechanical strength thereof is lowered although the softness thereof is improved.

On the other hand, if the amount of the salt added is small, the density of the sponge to be produced is high, and the softness thereof is lowered although the mechanical strength thereof is high. The crystalline Glauber's salt added to viscose is released and removed from the sponge produced, in the subsequent washing step.

To produce cellulose sponge, other auxiliary components such as colorant, etc. can be added to viscose, if desired. (Comparative Example 1 mentioned hereinafter is referred to, which is one example of general methods for producing cellulose sponge.)

Cellulose sponge thus produced is naturally characterized by having an excellent water-absorbing property, since the cellulose itself has a high hydrophilic property. Because of its characteristics, cellulose sponge is popularly used as cleaning things for washing cars, tableware, etc. However, the conventional cellulose sponge has drawbacks. Some of them are mentioned below.

(1) In general, the softness of dry cellulose sponge is poor.

(2) Cellulose sponge is noticeably shrunk after subjected to repeated cycles of wetting → drying → wetting. (In other words, the restorability of cellulose sponge during the cycles is poor.) As a result, the water absorbability of cellulose sponge is gradually lowered during the cycles.

(3) Since cellulose itself is a nutrient source for fungi, bacteria, etc., cellulose sponge is easily covered with mold. In addition, since the molecular chains of cellulose are degradated by cellulase (cellulose - decomposing enzyme) to be released by fungi, bacteria, etc., the mechanical strength of cellulose sponge infected with fungi, bacteria, etc. is noticeably lowered.

As means for solving the problems of (1) and (2), there are known a method of adding crystalline Glauber's salt having a small particle size to viscose and a method of adding reinforcing hollow fibers to the same, so as to improve the softness of the cellulose sponge to be produced. However, these methods are still unsatisfactory.

In addition, also known are a method of incorporating a latex into a viscose mixture so as to improve the softness of the cellulose sponge to be produced (Japanese Patent Publication No. 47-50867) ; a method of using an organic crosslinking agent so as to crosslink the molecules of cellulose (Japanese Patent Laid-Open No. 49-108169); and a method of adding an anionic surfactant and a polyol compound to a sponge stock (a mixture comprising viscose, reinforcing fibers and crystalline Glauber's salt) (Japanese Patent Laid - Open No. 2-135235).

However, the cellulose sponge to be obtained by these methods is improved with respect to its dry softness but is still unsatisfactory with respect to its shrinkage during the dry-wet cycles of drying, washing with water and drying. In addition, these methods have another problem in that the production costs are high.

The most important problem in the improved methods that have heretofore been proposed is that the latex, surfactant and polyol compound added are easily removed from the cellulose sponge produced, by washing, since these additives are not bonded to cellulose by covalent bonds and therefore the repetition effect of the cellulose sponge produced is difficult to obtain.

Glycerin has heretofore been employed as a wetting agent for cellulose sponge, which, however, is released by only one washing of cellulose sponge containing it. Therefore, this is ineffective in the washed cellulose sponge.

To solve the problem of (3), generally employed are a method of kneading anti-microbial zeolite into cellulose sponge (Japanese Patent Laid - Open No. 2-153723) and a method of kneading various anti-microbial agents into the same, by which the cellulose sponge is made to be hardly invaded by fungi and bacteria.

The anti-microbial effect resulting from these means lasts for a short period of time, but the anti-microbial agent added is released after repeated washing and drying for a long period of time, resulting in a problem in that the anti-microbial effect is lowered.

In addition, there is a probability that the anti-microbial agent added will adhere to the skin of hand and to tableware, causing chemical injury to human bodies.

Preferred embodiments of the present invention may solve or ameliorate the above mentioned problems in the prior art and provide a cellulose derivative sponge which has excellent dry softness, which has excellent restorability after wetted and which is hardly decomposed by cellulase that is secreted by fungi, bacteria, etc. In another aspect, preferred embodiments provide an advantageous method of producing such a cellulose derivative sponge at low production costs.

Accordingly, the present invention provides a cellulose derivative sponge comprising a cyanoethylated cellulose having a nitrogen content of 0.1 % by weight or more in terms of the cyanoethyl group, and reinforcing fibers.

The present invention also provides a method for producing a cellulose derivative sponge, wherein the sponge stock obtained by adding to viscose from 1 to 50 % by weight, based on the weight of the cellulose component in the viscose, of reinforcing fibers, from 25 to 100 times by weight, based on the weight of the cellulose component in the viscose, of crystalline Glauber's salt ($Na_2SO_4 \cdot 10H_2O$) having a mean particle size of from 0.01 to 5 mm, and from 0.1 to 1 mol per one glucose unit ($C_6H_{10}O_5$) of the cellulose component in the viscose, of acrylonitrile is shaped, coagulated, regenerated and then washed with water.

As one embodiment of the method of the present invention, the sponge stock is shaped in a mold.

As another embodiment of the method of the present invention, the sponge stock is extruded into a coagulation bath through a die so that it is shaped into strings therein.

As another embodiment of the present invention, the cellulose derivative sponge produced is treated with an acid or an alkali thereby partly or wholly hydrolyzing the cyanoethyl groups that have been introduced into the cellulose molecules to obtain a modified cellulose derivative sponge.

As a preferred embodiment of the modified cellulose derivative sponge, the substituents resulting from the hydrolysis of the cyanoethyl groups with an acid or an alkali are carbamoylethyl groups or carboxyethyl groups (including salt (Na, K, etc.) of carboxyethyl groups).

Cellulose derivatives referred to herein include cyanoethyl cellulose, carbamoylethyl cellulose and carboxyethyl cellulose (including salts of carboxyethyl cellulose).

BRIEF DESCRIPTION OF THE DRAWINGS

Fig. 1 shows an infrared absorption spectral chart of cyanoethylated cellulose.

Fig. 2 shows an infrared absorption spectral chart of carboxyethylated cellulose.

Fig. 3 shows an explanatory view for the operation of measuring the specific gravity of sponge, in which ① to ⑦ correspond to those in the explanatory description give hereinafter. In Fig. 3, 1 is a messflask, 2 is a stopper, 3 is water, and 4 is sponge chips.

DETAILED DESCRIPTION OF THE INVENTION

The present invention will be described in detail hereunder.

Cellulose is a linear polymer in which D-(+)-glucose moieties are bonded to each other via β-(1→4)-glycosido bond therebetween (see formula (1)).

Many hydroxyl groups in the cellulose molecule form strong intra - intermolecular hydrogen bonds so that cellulose has an extremely large side by side interaction (molecular cohesive force). Therefore, in general, cellulose does not dissolve in water or organic solvents.

It is considered that the poor dry softness of cellulose sponge is caused by the strong molecular cohesive force of cellulose.

When sponge is wet, it is presumed that many water molecules exist around the cellulose molecules and they prevent the extreme cohesion of cellulose molecular chains to make the sponge brittle. When it is dry, however, the content of water molecules in sponge is extremely lowered, thereby resulting in the acceleration of the molecular cohesion, so that the dry sponge is extremely brittle.

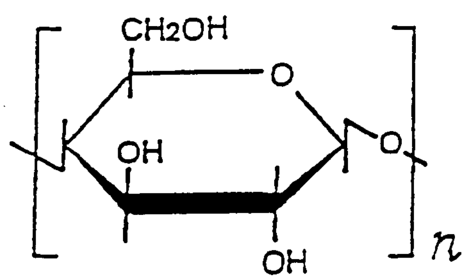

(1)

It is considered that both the brittleness of dry sponge and the shrinkage of sponge during and after wet-dry cycles are caused by the strong molecular cohesion force of cellulose in sponge.

The best method for solving the shortcomings of cellulose sponge in its physical properties is to suitably retard the molecular cohesion force of cellulose in the sponge.

To weaken the molecular cohesion force of cellulose, it is effective to add a surfactant or a polyol compound to cellulose.

However, since the surfactant and the polyol compound added to cellulose are not bonded to cellulose molecules by covalent bonds, they are easily removed by washing or the like operation so that they cannot maintain the effect of retarding the molecular cohesion force of cellulose molecules for a long period of time.

The present inventors have assiduously investigated this problem and, as a result, have found that the molecular cohesion of cellulose can be inhibited by directly introducing a substance capable of inhibiting the molecular cohesion of cellulose into cellulose molecules.

Specifically, when short branches are introduced into cellulose molecules which are naturally linear, the cohesion of the resulting cellulose molecules becomes impossible as being hindered by the branches.

When acrylonitrile is used as the chemical substance to form the branches of cellulose, an extremely excellent effect is obtained.

Acrylonitrile is activated by a strong basic catalyst (for example, NaOH, KOH), thus reacting with a hydroxyl group to give cyanoethyl group (Michael addition reaction).

In the present invention, cellulose xanthate, which is one essential component of viscose, reacts with acrylonitrile in viscose under an alkaline condition according to the reaction shown by formula (2), then giving cyanoethyl cellulose by regeneration of viscose under an acidic condition.

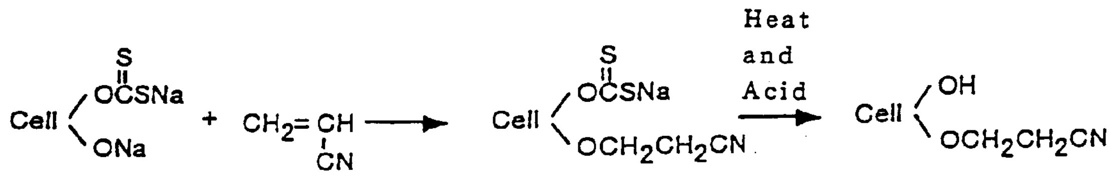


(2) (3) (4) (5)

Formula (2)

In this formula, (2) to (5) are as follows:

(2) cellulose xanthate in viscose;

(3) acrylonitrile;

(4) cyanoethylated cellulose xanthate (intermediate);

(5) cyanoethylated cellulose.

The cyanoethyl groups that have been introduced into cellulose molecular chains act as short branches on the cellulose molecular chains, thus effectively inhibiting the molecular cohesion of cellulose.

Since the cyanoethyl groups are bonded to cellulose molecules by covalent bond, they exist as they are without being removed from the cellulose molecules, if not treated chemically.

Therefore, even if the thus-obtained cellulose derivative is repeatedly washed with water, the cyanoethyl groups are not released from the derivative.

The confirmation of the introduction of the cyanoethyl groups and the determination of the amount of the cyanoethyl groups introduced can be conducted by infrared (IR) absorptiometer and elementary analysis, respectively.

As one example, Fig. 1 shows an IR absorption spectrum of a cellulose derivative obtained by IR absorptiometric analysis (Example 2, Experiments No. 4), in which used was IR Spectrometer 1560FTIR Model produced by Parkin Elmer, Japan Co.

The sharp peak shown at 2255 $cm^{-1}$ supports the introduction of the cyanoethyl group into the derivative. Even when this cellulose derivative sponge is washed with water, the peak does neither attenuate nor disappear.

The determination of the cyanoethyl groups in the derivative is conducted by elementary analysis. For example, employed is CHN Coder MT-5 Analyzer produced by Yanagimoto Seisakusho Company.

The degree of substitution of cyanoethyl groups in the cellulose derivative sponge is calculated on the basis of the nitrogen content therein.

A preferable nitrogen content is in the range 0.1~2.0 % by weight.

The number on average of hydroxyl groups that have been substituted with cyanoethyl groups in the glucose residues (formula 1) each having three hydroxyl groups, which are the basic constitutive units of cellulose, is defined by the degree of substitution (DS). The maximum value of DS is 3. The DS value can be calculated from the percentage by weight of the N content in the sponge, according to the following formula (3):

$$DS = (162N)/(1400 - 53N) \quad (3)$$

In this formula, N = the percentage by weight of nitrogen in sponge.

The present cellulose derivative sponge may be referred to as a cyanoethylated sponge hereinafter.

The cyanoethylated sponge can be produced extremely easily. The method for producing it will be described below.

The material of cellulose to be used in preparing the raw material viscose for use in the present invention is not specifically defined. It may include, for example, pulp, cotton, hemp, etc.

The concentration of cellulose to be in the raw material viscose is not also specifically defined. In general, it may be from 5 to 13 % by weight of viscose.

The alkali concentration in viscose must be at least 3 % by weight. If it is less than 3 % by weight, the dissolution of cellulose xanthate in such viscose will be insufficient. The uppermost limit of the alkali concentration in viscose is not defined. However, a higher alkali concentration than 20 % by weight is not economical.

The viscosity of the raw material viscose is not specifically defined. However, if it is lower than 20 poises, crystalline Glauber's salt will precipitate when it is kneaded and mixed with viscose. If so, the porosity distribution in the shaped sponge to be obtained will be uneven so that the mechanical strength of the sponge is low. If so, in addition, the dry sponge will be brittle although the wet sponge is soft.

On the other hand, if the viscosity of the raw material viscose is higher than 150 poises, the dispersibility of reinforcing fibers and Glauber's salt in viscose when they are mixed with it will be poor. If so, in general, the porosity distribution in the sponge obtained will be uneven and the sponge will be hard.

The amount of reinforcing fibers to be added to viscose is from 1 to 50 % by weight relative to cellulose in viscose.

If it is less than 1 % by weight, a satisfactory reinforcing effect cannot be attained. On the contrary, if a larger amount of reinforcing fibers more than 50 % by weight are added thereto, the ratio of the reinforcing fibers added to the whole sponge matrix will be too large so that the sponge to be obtained cannot have its natural softness.

As reinforcing fibers usable are natural fibers and semi-synthetic fibers, such as cotton, rayon, hemp, silk, etc., as well as synthetic fibers, such as polyesters, nylons, etc.

The kind, the fiber length and the thickness of the reinforcing fibers to be used in the present invention are not specifically defined. It is desirable to use fibers having a thickness of from 1 to 100 deniers or so and a length of from 3 mm to 15 mm or so, as such can be kneaded smoothly with viscose and other components.

If too long fibers are used, such will be entangled to give lumps and therefore cannot be uniformly dispersed in the sponge stock.

After reinforcing fibers have been kneaded with viscose, acrylonitrile is added thereto. The amount of acrylonitrile to be added is from 0.1 to 1 mol per one glucose unit of the cellulose component in the viscose.

If the amount is less than 0.1 time by mol, the amount of the cyanoethyl groups to be introduced into the sponge will be insufficient. If so, the addition of acrylonitrile will be ineffective.

On the contrary, if it is more than 1 time by mol, too many cyanoethyl groups will be introduced into the sponge.

If such too many cyanoethyl groups are introduced onto the cellulose chains, the cohesive force of the cellulose chains will be inhibited too much and the resulting cellulose will become partly soluble in water.

The cellulose sponge having too many cyanoethyl groups introduced thereinto partly dissolves in water and such is impracticable.

Crystalline Glauber's salt is a means for forming the foamed structure of the sponge, and this is composed of particles having a mean particle size of from 0.01 to 5 mm or so. The amount of this salt to be added is from 25 to 100 times by weight based on the weight of cellulose in viscose.

The order of adding these components to viscose is not specifically defined. Reinforcing fibers are dispersed relatively easily in viscose but are difficult to disperse in a mixed liquid comprising viscose and crystalline Glauber's salt as the liquid has a high viscosity.

In view of the easiness in handling the mixture, it is recommended to add reinforcing fibers and then Glauber's salt in this order since the reinforcing fibers are more efficiently dispersed in the resulting mixture.

The softness of the sponge of the present invention greatly varies, depending on the particle size of the crystalline Glauber's salt added. Therefore, the particle size of the salt and the amount thereof to be added shall be suitably determined in accordance with the use and the object of the sponge.

The crystalline Glauber's salt added to viscose is easily released and removed from the sponge in the successive regeneration step and rinsing step.

The acrylonitrile-containing sponge stock thus prepared in the manner as mentioned above is shaped and then regenerated to a cyanoethylated sponge.

The shaping and regeneration for producing ordinary cellulose sponge is conducted under heat, which may apply to the production of the acrylonitrile-containing sponge of the present invention.

The above-mentioned sponge stock is cast into a mold having a desired shape, this is coagulated under heat, regenerated under heat and then brought into contact with an acidic aqueous solution whereby the alkali component remaining in the sponge is neutralized. Finally, this is washed with water and then dried to obtain the intended sponge.

The heating of the shaped object for coagulating and regenerating it is the same as that for coagulating and regenerating ordinary viscose mixtures. In general, the temperature for this is in the range 90°C~100°C, and the heating time is about 2 hours (Example 1). Such may apply also to the cyanoethylation.

Apart from the mold heating method, the sponge of the present invention can also be produced by extruding the sponge stock into a coagulation bath containing a thick salt solution to thereby shape it in the bath.

The salts to be in the coagulation bath are those which can well de-water the sponge stock to coagulate it in the bath. They include, for example, ammonium chloride, ammonium sulfate, sodium sulfate, sodium chloride, zinc sulfate, magnesium sulfate, sodium bisulfite, sodium phosphate, ammonium phosphate, sodium silicate, sodium thiosulfate, sodium bicarbonate, ammonium bicarbonate, sodium salts of fatty acids, sodium benzenesulfonate, etc. These can be used singly or as their suitable mixtures.

It has been found that ammonium chloride is extremely preferred for the coagulation object of the present invention as it has a high de-watering power.

Ammonium chloride exhibits a much higher de-watering and coagulating effect for the mixture prepared by adding to viscose reinforcing fibers, crystalline Glauber's salt and acrylonitrile, than any other salts mentioned herein. When tested under the same condition, the time for coagulating the mixture in the presence of ammonium chloride is the shortest.

The temperature of the thick salt solution is not specifically defined. However, if it is higher than 80°C, the regeneration of viscose will be promoted too much. Therefore, such high temperatures are not preferred.

In consideration of the economical aspects such as the energy cost, etc., it is preferred that the temperature of the solution is near to room temperature.

To de-water and coagulate the mixture prepared by adding reinforcing fibers and crystalline Glauber's salt to viscose, in the salt solution, the concentration of the salt or the salt mixture in the solution must be 20 % by weight or more in all. For the uppermost limit of the concentration, the solution may contain the saturated amount of the salt or the salt mixture.

The higher the concentration of the salt solution, the shorter the time for the coagulation of the sponge stock. The shape and the size of the extruded body is not specifically defined. The larger the size, the longer the de-watering time or the coagulation time in the salt solution.

The concentration and the amount of the salt solution necessary for shaping and coagulating the intended amount of the mixture, that has been prepared by adding to viscose reinforcing fibers, crystalline Glauber's salt and acrylonitrile, into the intended size, as well as the time necessary for such coagulation can be obtained easily by a simple preparatory coagulation test.

According to an ordinary process, for example, Kraft pulp from conifers is used as the raw material pulp, this is dipped in an alkali, squeezed, ground, the aged at 70°C for 3 hours, and thereafter reacted with 35 % by weight, relative to the weight of the pulp, of carbon disulfide to obtain cellulose xanthate, and this cellulose xanthate is dissolved in an aqueous sodium hydroxide aqueous solution to obtain viscose having a cellulose concentration of 9 % and an alkali concentration of 9 %.

This viscose is ripened at 20°C for 10 hours, then 0.88 parts of acrylonitrile are added to 100 parts of this viscose, 0.9 parts, per 100 parts of this viscose, of cellulose fibers having a mean fiber length of about 7 mm and a thickness of 1.5 deniers are added thereto, as reinforcing fibers, and additionally 360 parts, per 100 parts of this viscose, of crystalline Glauber's salt 10-hydrate having a mean particle size of 70 microns are added thereto. Then, the resulting mixture is kneaded, using a biaxial kneader, to prepare a sponge stock. When this is extruded into an aqueous solution of 30 % ammonium chloride through a hole having a diameter of 6 mm, it needs about one minute before it is completely coagulated. However, when this is extruded into the same through a hole having a diameter of 10 mm, it needs about 2 times before the same.

30 liters of the above-mentioned sponge stock could be continuously de-watered and coagulated in 30 liters of an aqueous solution of 30 % ammonium chloride.

If this sponge stock is completely coagulated by a conventional method under heat, it needs at least about 1 hour before its complete coagulation (for example, Japanese Patent Laid-Open Nos. 03-52938 and 02-135234).

To shape the sponge stock of the present invention, either mold shaping or extrusion shaping can be employed.

To regenerate the thus-shaped sponge stock into cellulose can be conducted under heat or by acid treatment.

If the regeneration is conducted under heat, the shaped body is regenerated in the second bath filled with boiling water while the crystalline Glauber's salt is removed by washing therein at the same time. In this process, the temperature of the hot water in the bath is desirably 80°C or higher.

It is also possible to use, as the second bath, a hot aqueous salt bath containing any salt of ammonium chloride, ammonium sulfate, sodium sulfate, sodium chloride, zinc sulfate, magnesium sulfate, sodium bisulfite, sodium phosphate, ammonium phosphate, sodium silicate, sodium thiosulfate, sodium bicarbonate, ammonium bicarbonate, sodium salts of fatty acids, sodium benzenesulfonate, etc.

The salt concentration in the bath is not specifically defined. However, if it is not lower than 20 %, the effect of the bath of washing the Glauber's salt out of viscose is insufficient so that a long time is needed for completely removing the salt from viscose.

On the other hand, when the regeneration is conducted in the presence of an acid, any of mineral acids, such as sulfuric acid, hydrochloric acid, nitric acid, phosphoric acid, etc., and organic acids, such as acetic acid, citric acid, pyruvic acid, benzenesulfonic acid, etc., can be employed. In view of the advantage of the rapid regeneration and removal of Glauber's salt, the regeneration method using acids is preferred.

The method of producing sponge by extruding it through a nozzle comprises two steps, one step ① being for coagulation of the liquid stock in a thick salt solution and the other step ② being for foaming the coagulated body by regeneration and removal of Glauber's salt under heat or with acids.

The cyanoethylated sponge thus prepared in the manner as mentioned above has better characteristics than the conventional cellulose sponge.

As mentioned above, the conventional cellulose sponge has a problem in that it becomes hard and is shrunk when dried. Surprisingly, the problem can be solved merely by adding acrylonitrile to viscose in an amount of only about 0.1 mol per one glucose unit of the cellulose in viscose.

In addition, since the cyanoethyl groups in the cyanoethylated sponge naturally have an anti-fungal property, the resistance to cellulase (cellulose decomposing enzyme) of the sponge, to which only 0.3 times by mol of acrylonitrile had been added, increased by 2 times that of the sponge to which no acrylonitrile had been added (see the examples and the comparative examples mentioned hereunder).

Moreover, cyanoethyl groups are relatively stable in a neutral region and are therefore hardly modified in said region, but these substituents are not so stable to acids and alkalis.

Therefore, when the cyanoethylated sponge of the present invention is treated with an acidic water or an alkaline water, the cyanoethyl groups are hydrolyzed into carboxyethyl groups via carbamoylethyl groups (see formula (4)).

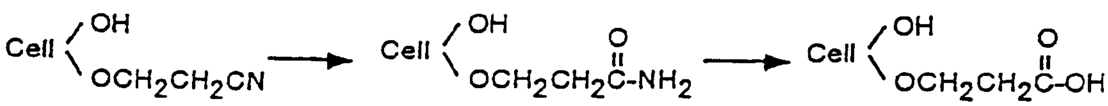

(6) (7)

Formura (4)

In formula (4), (6) to (7) are as follows:

(6) carbamoylethylated cellulose;

(7) carboxyethylated cellulose.

When the hydrogen atom of the carboxyl moiety in the carboxyethyl group in (7) is substituted by a metal (Na, K, etc.) or by a cationic base residue ($NH_4^+$, $N_2H_5^+$, etc.), then this group is referred to as a salt of carboxyethyl group.

However, since this substitution results in the local change in the terminal moiety in each of the cyanoethyl groups that have been introduced into the cellulose molecule as short branches, this is not substantially accompanied by the increase or decrease in the number of the cyanoethyl branches introduced into the cellulose molecule.

It has been found that there is not any significant difference between the modified sponge which is obtained by treating the cyanoethylated sponge with an acid or alkali thereby to hydrolyze a part or all of the cyanoethyl groups in the sponge and the original cyanoethylated sponge, with respect to the dry softness, the apparent density, the wet specific gravity and the cellulase resistance. This is demonstrated in Example 3.

The infrared absorption spectrum of the sponge obtained in Example 3 does not have the peak of the cyanoethyl group (see Fig. 2).

The peak of the carbonyl group (C=O) to be formed by hydrolysis of the cyanoethyl group shall be naturally observed at 1600 to 1700 $cm^{-1}$.

However, the IR spectrum of the cellulose derivative gives a large peak resulting from the bound water at 1640 $cm^{-1}$ in this area, so that the peak resulting from the carbonyl group is not clear in the spectrum as the former peak overlaps with the latter peak.

Comparing the IR spectrum of the cyanoethylated sponge shown in Fig. 1 with that of the hydrolyzed sponge shown in Fig. 2 with respect to the peak near 1640 $cm^{-1}$, these are different form each other in that the relative intensity of the peak itself is large in the latter and that a shoulder peak has appeared in the latter.

It is considered that the shoulder peak is a peak resulting from the carbonyl group (C=O) to be formed by

hydrolysis of the cyanoethyl group and that the relative intensity of the peak near 1640 $cm^{-1}$ is enlarged due to the overlapping of these peaks.

Anyhow, as a result of the analysis of nitrogen of the sponge obtained in Example 3, no nitrogen was detected. From this, it may be said that the hydrolysis of the cyanoethyl group in the sponge was completed in the process of Example 3.

Next, the present invention will be described in more detail by means of the following examples.

Example 1:

* Example of shaping sponge, using a mold:

(Preparation of viscose for producing cellulose sponge)

Kraft pulp from conifers was used as the raw material pulp. According to an ordinary method, this was dipped in an alkali, squeezed, ground, then aged at 70°C for 3 hours, and thereafter reacted with 35 % by weight, relative to the weight of the pulp, of carbon disulfide to obtain cellulose xanthate.

This cellulose xanthate was dissolved in an aqueous sodium hydroxide solution to obtain viscose having a cellulose concentration of 9.0 % and an alkali concentration of 8.5 %.

This viscose was ripened at 20°C for 10 hours. Thus, viscose for producing sponge was obtained.

(Preparation of viscose mixture for producing cellulose sponge)

0.9 parts by weight of cellulose fibers having a mean fiber length of 7 mm and a thickness of 1.5 denier were added, as reinforcing fibers, to 100 parts by weight of the above-mentioned viscose. In addition, a predetermined amount of acrylonitrile was added thereto and kneaded for 10 minutes. Then, 360 parts by weight of crystalline Glauber's salt 10-hydrate having a mean particle size of 70 microns were added thereto and further kneaded for 10 minutes, using a double-screw kneader. (Shaping and regeneration of sponge)

The sponge stock thus prepared was cast into a mold having a length of 20 cm, a width of 20 cm and a height of 20 cm and boiled at 98°C for about 2 hours. After washed with water, this was neutralized with an aqueous solution of 1 % acetic acid and then again washed with water to obtain a cyanoethylated sponge. This sponge was cut into cubes of 1 $cm^3$, which were used in the following tests.

Table 1

| Experiment No. | Amount of AN Added (parts by weight) | AN/AHG (by mol) | N content in Sponge (% by weight) | Degree of Cyanoethylation (DS) |
|---|---|---|---|---|
| Example 1-1 | 0.883 | 0.3 | 0.171 | 0.0199 |
| Example 1-2 | 2.206 | 0.75 | 0.413 | 0.0485 |

Abbreviations: AN = Acrylonitrile

AHG = Glucose Units in Cellulose

Example 2:

∗ Example of shaping sponge by direct extrusion of a sponge stock through a die into a coagulation bath, not using a mold:

The sponge stock of Example 1 was extruded through a die having a pore diameter of 10 mm into an aqueous solution of 30 % ammonium chloride, using a screw pump, and kept therein for 2 minutes to shape it into a string.

The thus-shaped string was dipped in a regeneration bath (70°C) containing 7 % by weight of $H_2SO_4$ for 4 minutes and then washed with water to obtain a cyanoethylated sponge. This was cut into pieces of 1 cm long, which were used in the following tests.

Table 2

| Experiment No. | Amount of AN Added (parts by weight) | AN/AHG (by mol) | N content in Sponge (% by weight) | Degree of Cyanoethylation (DS) |
|---|---|---|---|---|
| Example 2-1 | 0.294 | 0.1 | 0.163 | 0.0190 |
| Example 2-2 | 0.883 | 0.3 | 0.252 | 0.0294 |
| Example 2-3 | 1.471 | 0.5 | 0.430 | 0.0506 |
| Example 2-4 | 2.206 | 0.75 | 1.20 | 0.145 |

Abbreviations: AN = Acrylonitrile

AHG = Glucose Units in Cellulose

Example 3:

* Example of producing carboxyethylated sponge:

10 g of the sponge prepared in Experiment No. 2-4 in Example 2 were dipped in 1000 ml of an aqueous solution of 0.1 M sulfuric acid at 70°C for 12 hours, then washed with water, neutralized with an aqueous solution of 0.1 M sodium hydroxide and again washed with water to obtain a carboxyethylated sponge where all the cyanoethyl groups had been hydrolyzed. As a result of analysis of the product to detect nitrogen, if any, no nitrogen was detected in the hydrolyzed sponge.

Comparative Example 1:

* Conventional example not conducting cyanoethylation:

The same viscose for producing cellulose sponge as that in Example 1 was used. 0.9 parts by weight of cellulose fibers having a mean fiber length of 7 mm and a thickness of 1.5 denier were added, as reinforcing fibers, to 100 parts by weight of the viscose. In addition, 360 parts by weight of crystalline Glauber's. salt 10-hydrate having a mean particle size of 70 microns were added thereto and kneaded for 10 minutes, using a biaxial kneader.

The thus-prepared sponge stock was shaped according to the same mold heating method as that in Example 1 and then washed with water to obtain a sponge. This is referred to as a sponge of Comparative Example 1-1.

The same sponge stock was spun according to the same continuous spinning method as that in Example 2 to obtain a sponge, which is referred to as a sponge of Comparative Example 1-2.

Comparative Example 2:

0.9 parts by weight of cellulose fibers having a mean fiber length of 7 mm and a thickness of 1.5 denier were added, as reinforcing fibers, to 100 parts by weight of the same viscose for producing cellulose sponge as that in Example 1. In addition, a prescribed amout of acrylonitrile was added thereto and kneaded for 10 minutes. Then, 360 parts by weight of crystalline Glauber's salt 10-hydrate having a mean particle size of 70 microns were added thereto and kneaded for further 10 minutes, using a biaxial kneader.

The thus-obtained sponge stock was extruded through a die having a pore diameter of 10 mm into an aqueous solution of 30 % ammonium chloride, using a screw pump, and kept therein for 2 minutes to shape it into a string.

The thus-shaped string was dipped in a regeneration bath (70°C) containing 7 % by weight of $H_2SO_4$ for 4 minutes and then washed with water to obtain a cyanoethylated sponge.

Table 3

| Experiment No. | Amount of AN Added (parts by weight) | AN/AHG (by mol) | N content in Sponge (% by weight) | Degree of Cyanoethylation (DS) |
|---|---|---|---|---|
| Comparative Example 2-1 | 0.088 | 0.03 | 0.01 or less | 0.001 or less |
| Comparative Example 2-2 | 5.890 | 2 | Analysis was impossible, since the sample was partially soluble in water. | Analysis was impossible, since the sample was partially soluble in water. |

Abbreviations: AN = Acrylonitrile

AHG = Glucose Units in Cellulose

In Comparative Example 2-1, since the amount of the acrylonitrile added was too small, the acrylonitrile was ineffective.

In Comparative Example 2-2, since the amount of the acrylonitrile added was too large, the sponge formed partly dissolved in water. In addition, its mechanical strength was extremely low, the sponge was impracticable.

[Method of Evaluating Sponge]

(1) Dry brittleness of sponge to be easily broken (according to a ball-milling method):

Sponge chips, each having a diameter of 8 mm and a length of 10 mm in water, were dried at 105°C for 24 hours to prepare dry sponge chips. One g of these chips were milled for 5 minutes, using a planetary mill (P-7 Model Mill, produced by Fritsch Japan Co.). The machine was equipped with a 45 ml - Duracon (polyacetal) container, into which three Teflon-coated ball (diameter: 15 mm) were put. Then, the thus-milled sponge chips were sieved through a 2 mm-mesh sieve, and the chips remained on the sieve was weighed.

(2) Softness of sponge:

A wet sponge, after having been regenerated and washed with water, was dried at 105°C for 12 hours and evaluated by a sensual test.

◎ .... Very good.
○ .... Good.
Δ .... Ordinary.
× .... Not good.

(3) Measurement of specific gravity of sponge:

① Dry → wet operation:

Dry sponge chips were floated on the surface of water or dipped in water and these were degassed, using an aspirator, and thereafter these were fully swollen with water. The sponge after this operation is hereinafter referred to as a wet sponge.

② Instruments:

- Messflask (with a stopper, having a capacity of 100 ml)
- Balance (capable of weighing a sample at a 1 mg unit)

③ Process:

① The messflask with a stopper was dried, and its weight (A g) was measured.
② The messflask was filled with water and sealed with the stopper. No air was made to remain in the messflask.
③ The outer surface of the thus-filled messflask was wiped and dried, and its weight (B g) was measured.
④ The water was removed and the messflask was dried.
⑤ Wet sponge chips (sampled as at random as possible) were put into the messflask and rightly drained. Under no pressure, an appropriate amount of water was added to the messflask (up to near the reference line), and the messflask was sealed with its stopper and weighed (C g).
⑥ Next, water was added to this, bubbles were removed therefrom, and water was again filled thereto. The messflask was then sealed with its stopper.
⑦ The outer surface of the messflask was wiped and dried, and its weight (D g) was measured.
⑧ The sponge chips were taken out from the messflask and completely dried (at 105°C for 12 hours) and then weighed (E g).

④ Method of calculation:

Apparent Density (g-dry/ml-wet)

$$= E/[(B - A) - (D - C)]$$

This was calculated down to the third decimal place.

Specific Gravity of Wet Sponge (g-wet/ml-wet)

$$= (C - A)/[(B - A) - (D - C)]$$

This was calculated down to the third decimal place.

⑤ Times of measurement:

Each sample was measured three times, and the average value was obtained.

(4) Percentage of Restoration:

The volume of an undried sponge pellet (virgin sponge pellet) was obtained. (For cylindrical pellets, the diameter and the height were measured in water to the 0.1 mm unit place. From the thus-measured value, the volume was calculated.)

The same sponge pellet was dried at 105°C for 12 hours (one-dry sponge pellets), and then swollen

in water. Its length was measured in water, and its volume was obtained. The percentage of restoration of the sponge is obtained by the following equation:

Percentage of Restoration (%)

= [(volume of one-dry sponge pellets in water) / (Volume of virgin sponge pellets in water)] × 100

Ten samples were measured for each 10 lots, and the average value was obtained.

(5) Test for Cellulase Resistance:

0.02 % by weight of $NaN_3$ and 0.5 % by weight of cellulase (ONOZUKA R-10) were dissolved in 0.1 mM citric acid and 0.2 mM $Na_2HPO_4$ buffer (pH 4.5) to prepare an enzyme solution for the test.

Two wet sponges (diameter 10 mm x length 10 mm) were put into an L-shaped tube filled with 10 ml of the enzyme solution, thus the former being dipped in the latter. This was shaken by reciprocating motion at 70 rpm at 37°C to conduct the enzymatic reaction.

The change in the shape of each sponge, which is the substrate for the enzyme, was observed with the lapse of time. The time when the sponge being tested became deformed was recorded. The sponge that kept its shape without being deformed for a longer period of time has higher cellulase resistance.

[Results]

① Dry brittleness, easiness in breaking, softness:

Table 4

| Experiment No. | N Content in Sponge (% by weight) | Degree of Cyanoethylation (DS) | Weight of Sponge Remained without being Powdered (g) | Softness |
|---|---|---|---|---|
| Example 2-2 | 0.252 | 0.0294 | 0.876 | ○ |
| Example 2-3 | 0.430 | 0.0506 | 0.905 | ◎ |
| Example 2-4 | 1.20 | 0.145 | 0.963 | ◎ |
| Example 3 | 0 | 0 | 0.896 | ◎ |
| Comparative Example 1-1 | 0 | 0 | 0.514 | △ |
| Comparative Example 1-2 | 0 | 0 | 0.467 | △ |

② Specific gravity and percentage of restoration of sponge:

Table 5

| Experiment No. | N Content in Sponge (% by weight) | Virgin Sponge | | One-dry Sponge | | Percentage of Restoration (%) |
|---|---|---|---|---|---|---|
| | | Apparent Density | Specific Gravity of Wet Sponge | Apparent Density | Specific Gravity of Wet Sponge | |
| Example 1-2 | 0.413 | 0.0315 | 1.0150 | 0.0426 | 1.0213 | 78.9 |
| Example 2-1 | 0.163 | 0.0417 | 1.0139 | 0.0657 | 1.0228 | 56.9 |
| Example 2-2 | 0.252 | 0.0390 | 1.0135 | 0.0488 | 1.0146 | 73.8 |
| Example 2-3 | 0.430 | 0.0403 | 1.0128 | 0.0405 | 1.0118 | 93.1 |
| Example 2-4 | 1.20 | 0.0456 | 1.0148 | 0.0455 | 1.0151 | 95.1 |
| Example 3 | 0 | 0.0445 | 1.0135 | 0.0450 | 1.0144 | 96.0 |
| Comparative Example 1-1 | 0 | 0.0461 | 1.037 | 0.0957 | 1.039 | 56.2 |
| Comparative Example 1-2 | 0 | 0.0432 | 1.037 | 0.0984 | 1.0288 | 52.0 |
| Comparative Example 2-1 | 0.01 or less | 0.0428 | 1.039 | 0.0998 | 1.039 | 53.0 |

Apparent density: (g-dry/ml-wet)

Specific gravity of wet sponge: (g-wet/ml-wet)

③ Test for Cellulase Resistance:

Table 6

| Experiment No. | N Content in Sponge (% by weight) | Breaking Time (hr) |
|---|---|---|
| Example 2-2 | 0.252 | 2.0 |
| Example 2-3 | 0.430 | 2.0 |
| Example 2-4 | 1.20 | 2.3 |
| Example 3 | 0 | 1.5 |
| Comparative Example 1-1 | 0 | 1.0 |
| Comparative Example 1-2 | 0 | 1.0 |
| Comparative Example 2-1 | 0.01 or less | 1.0 |

From the results mentioned above, it is obvious that the cyanoethylated cellulose sponge and the hydrolyzed sponge of the present invention, the latter being derived from the former by hydrolysis, have better dry softness, better restorability and higher cellulase resistance than conventional cellulose sponge.

## Claims

1. A cellulose derivative sponge comprising a cyanoethylated cellulose having a nitrogen content of 0.1 % by weight or more in terms of the cyanoethyl group, and reinforcing fibers.

2. A method for producing a cellulose derivative sponge, wherein a sponge stock obtained by adding to viscose from 1 to 50 % by weight, based on the weight of the cellulose component in the viscose, of reinforcing fibers, from 25 to 100 times by weight based on the weight of the cellulose component in the viscose, of crystalline Glauber's salt having a mean particle size of from 0.01 to 5 mm, and from 0.1 to 1 mol per one glucose unit of the cellulose component in the viscose, of acrylonitrile is shaped, coagulated, regenerated and then washed with water.

3. The method as claimed in claim 2, in which the sponge stock is shaped in a mold.

4. The method as claimed in claim 2, in which the sponge stock is extruded into a coagulation bath through a die so that it is shaped into strings therein.

5. A cellulose derivative sponge as obtainable by treating a cellulose derivative sponge as claimed in claim 1 with an acid or an alkali thereby partly or wholly hydrolyzing the cyanoethyl groups that have been introduced into the cellulose molecules.

6. The cellulose derivative sponge as claimed in claim 5, in which the substituents resulting from the hydrolysis of the cyanoethyl groups with an acid or an alkali are carbamoylethyl groups or carboxyethyl groups (including salts of carboxyethyl groups).

Fig. 1

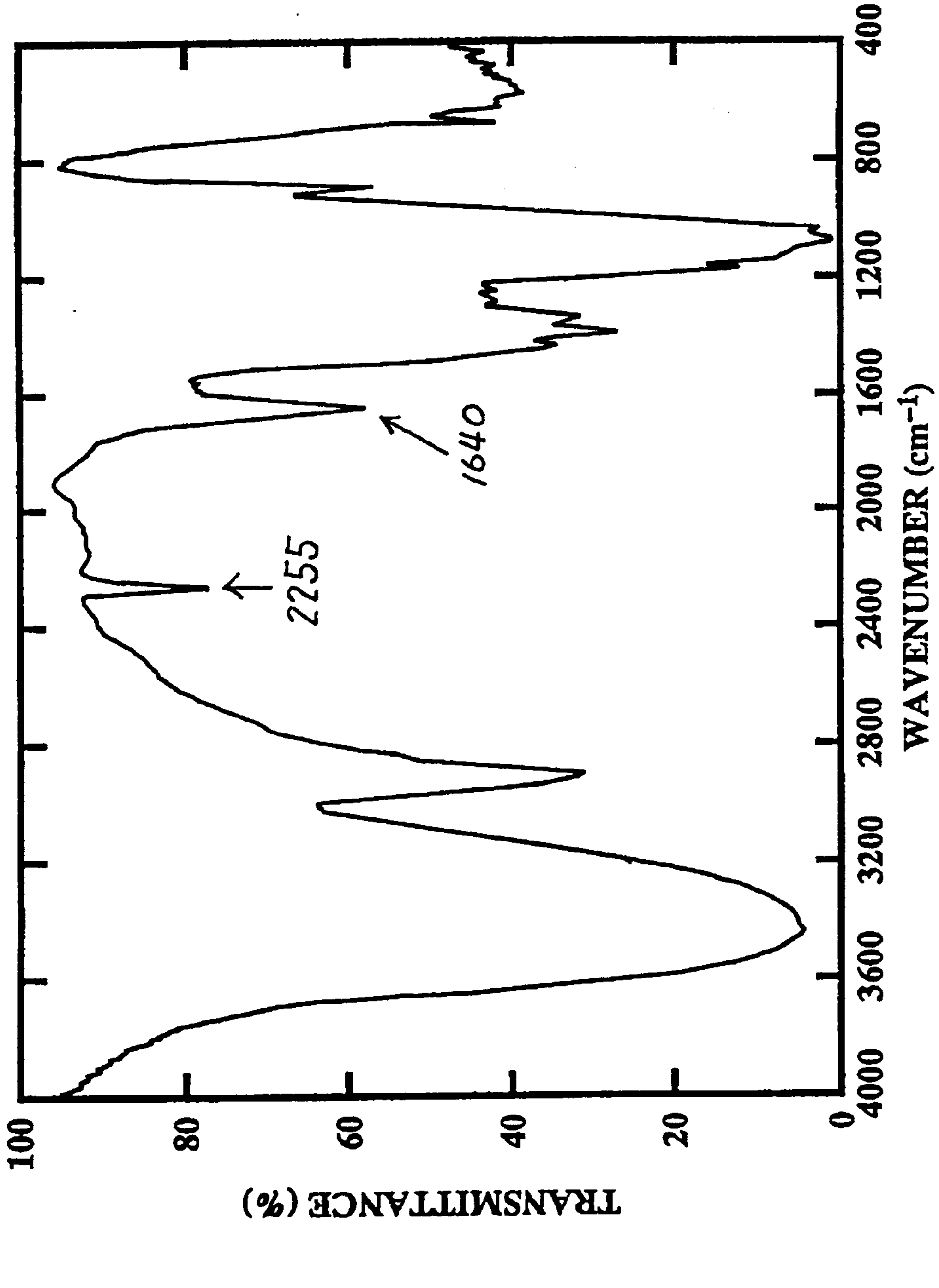

TRANSMITTANCE (%)
100
80
60
40
20
0
WAVENUMBER (cm⁻¹)
4000
3600
3200
2800
2400
2000
1600
1200
800
400
2255
1640

Fig.2

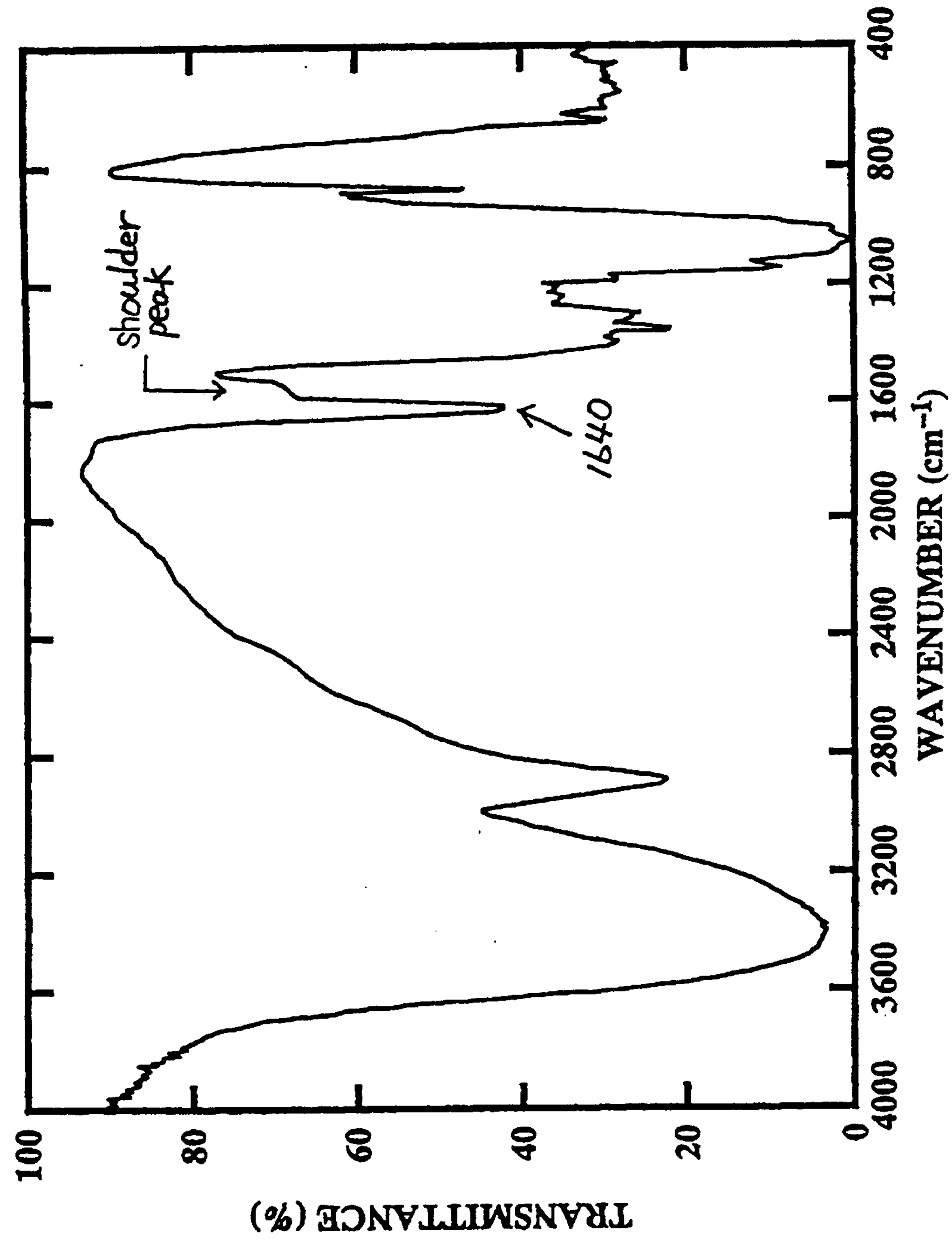
TRANSMITTANCE (%)
100
80
60
40
20
0
4000
3600
3200
2800
2400
2000
1600
1200
800
400
WAVENUMBER (cm$^{-1}$)
shoulder peak
1640

Fig.3

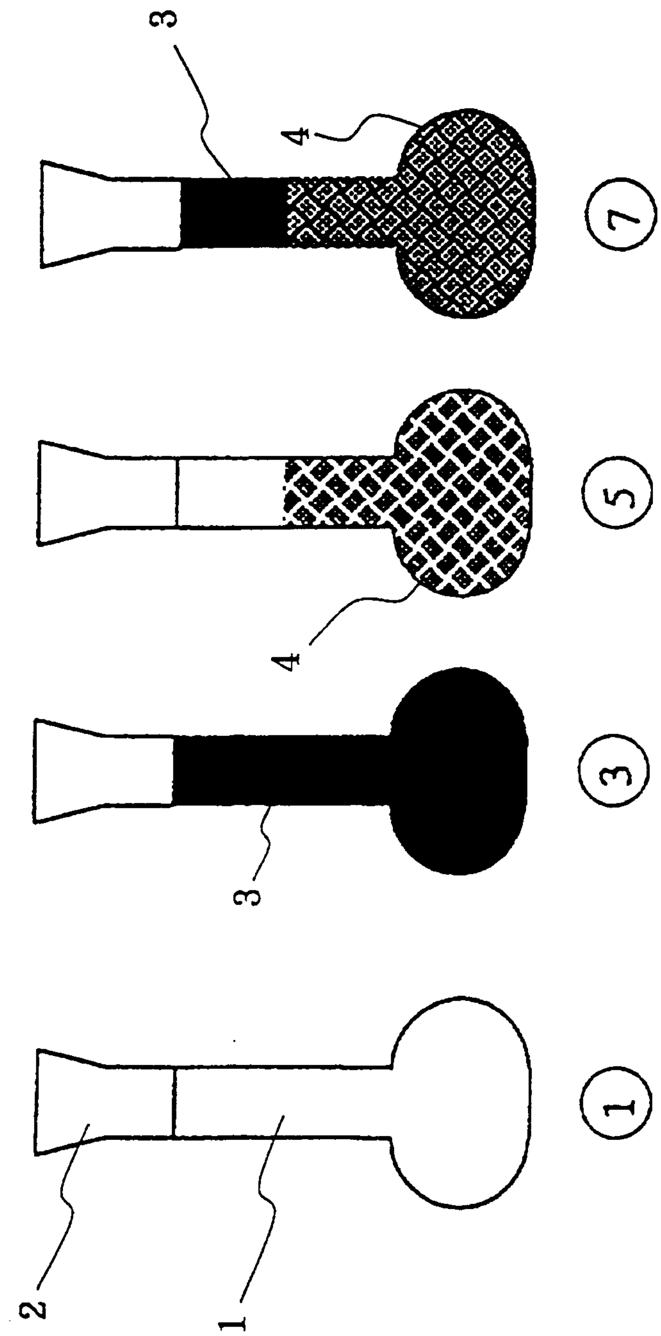

European Patent Office

# EUROPEAN SEARCH REPORT

Application Number
EP 95 30 1191

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | CHEMICAL ABSTRACTS, vol. 80, no. 24, 17 June 1974, Columbus, Ohio, US; abstract no. 135141, 'Continuous production of homogeneous spongy bodies of regenerated cellulose.' * abstract * & HU-A-5 628 (MAGYAR VISCOSA GYAR) 29 January 1973 --- | 1-6 | C08J9/26 C08B11/155 //C08L1:28 |
| A | GB-A-1 054 159 (SPONCEL LTD.) * example * --- | 1-6 | |
| A | GB-A-951 503 (AMERICAN CYANAMID CORP.) * claims 1-6 * --- | 1-6 | |
| A | DATABASE WPI Week 8942, Derwent Publications Ltd., London, GB; AN 89:306586 'New cyano ethyl cellulose dericatives for enzyme carrier, etc.' & JP-A-01 229 001 (NISSHIN SPINNING K. K.) 12 September 1989 * abstract * --- | 1-6 | TECHNICAL FIELDS SEARCHED (Int.Cl.6) C08J C08B |
| A | GB-A-1 501 239 (PERSONAL PRODUCTS COMPANY) Comparative example 10(c), page 5 * example II; table II * * claims * --- | 1-6 | |
| A | DATABASE WPI Week 8114, Derwent Publications Ltd., London, GB; AN 81:24234D 'Spongy wiping cloth production.' & JP-A-56 013 907 (NAKAMURA K.) 10 February 1981 * abstract * ----- | 1-6 | |

The present search report has been drawn up for all claims

| Place of search | Date of completion of the search | Examiner |
|---|---|---|
| THE HAGUE | 15 June 1995 | Oudot, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)